# EUROPEAN PATENT SPECIFICATION

(11) **EP 3 866 437 B1**
(45) Date of publication and mention of the grant of the patent: **16.08.2023**
(21) Application number: 21155364.9
(22) Date of filing: 05.02.2021
(51) Int. Cl.: H04L 9/40, H04L 9/08, H04L 9/14

(54) **SECURE COMMUNICATION**
SICHERE KOMMUNIKATION
COMMUNICATION SÉCURISÉE

(30) Priority: 17.02.2020 FI 20205160
(43) Date of publication of application: 18.08.2021
(73) Proprietor: Planora Oy, 90401 Oulu (FI)
(72) Inventor: Paavola, Mikko, 90401 Oulu (FI)
(74) Representative: Kolster Oy Ab

(56) References cited:
- WO-A1-01/63831
- WO-A1-2019/134868
- SEBASTIAN LAUER ET AL: "T0RTT: Non-Interactive Immediate Forward-Secret Single-Pass Circuit Construction", IACR, INTERNATIONAL ASSOCIATION FOR CRYPTOLOGIC RESEARCH , vol. 20191210:081114 9 December 2019 (2019-12-09), pages 1-22, XP061033926, Retrieved from the Internet: URL:http://eprint.iacr.org/2019/1433.pdf [retrieved on 2019-12-09]
- Anonymous: "Onion routing - Wikipedia", , 19 November 2015 (2015-11-19), XP055523305, Retrieved from the Internet: URL:https://en.wikipedia.org/w/index.php?t itle=Onion_routing&oldid=691457365 [retrieved on 2018-11-13]

## Description

### FIELD OF THE INVENTION

The present invention relates to a method and apparatus for secure communication.

### BACKGROUND OF THE INVENTION

In modern communication and computer networks, data exchange between devices is a vital element. Information between devices must be exchanged in a reliable and secure manner so that eavesdropping or other kind of monitoring of the communication is not possible.

WO 2019/134868 discloses a solution for end-to-end secure communication where a sender transmits a message to a recipient through relay user devices.

### BRIEF DESCRIPTION OF THE INVENTION

According to an aspect of the present invention, there are provided apparatus of claim 1.

According to an aspect of the present invention, there is provided a method of claim 7.

One or more examples of implementations are set forth in more detail in the accompanying drawings and the description below. Other features will be apparent from the description and drawings, and from the claims. The embodiments and or examples and features, if any, described in this specification that do not fall under the scope of the claims are to be interpreted as examples useful for understanding various embodiments of the invention.

### BRIEF DESCRIPTION OF THE DRAWINGS

In the following the invention will be described in greater detail by means of preferred embodiments with reference to the attached drawings, in which
Figure 1 illustrates an example environment where some embodiments of the invention may be applied;
Figure 2 is a flowchart illustrating a simplified example embodiment;
Figures 3A, 3B and 3C are flowcharts illustrating embodiments of the invention;
Figure 4 illustrates the structure of a message;
Figure 5 illustrates a simplified example of an apparatus applying some embodiments of the invention.

### DETAILED DESCRIPTION OF THE INVENTION

Securing communication from unwanted access has always been an important issue in all forms of communication. Since electric communication was made possible by the development of wired and wireless communication systems, different forms of encrypting and decrypting communicated data have been under constant development. This applies both to human-to-human communication and machine-to machine communication which has been increasing in recent years with the growth of so-called Internet of Things.

Internet of Things, IoT, may be understood in a broad sense as comprising all things connected to the Internet. In some exemplary embodiments, IoT may comprise communication of various devices, which may be automation devices, that are configured to perform sensing, measuring, processing, communication, actuation and to connect to one or more networks. In some other exemplary embodiments, IoT enables networking of sensors and/or control systems, which may enable real-time optimization of manufacturing production and/or supply chain networks.

In some embodiments, an Internet of Things system comprises a plurality of devices that collect, send and act on data that is received from an environment surrounding the devices comprised in the IoT system. The devices may be configured to communicate amongst themselves and act based on information received from the other, one or more, devices without human interaction or intervention. In some other embodiments, human interaction or intervention may be enabled.

It many applications it is highly desirable or even mandatory to secure the communication between devices, regardless of the type of devices, whether that are IoT devices or human controlled devices.

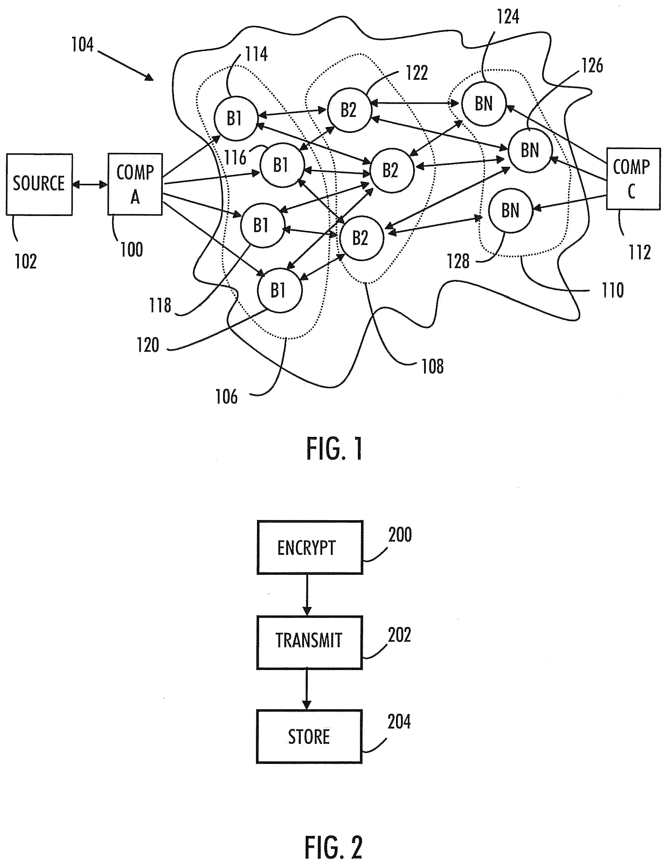

Fig. 1 illustrates an example environment where some embodiments of the invention may be applied.

The system illustrated in Fig.1 comprises a first apparatus 100. The first apparatus may be a computing device comprising at least one processor, at least one memory including computer program code, and one or more communication interfaces. In an embodiment, the apparatus is configured to receive data from a data source 102. The data source may be another computing device, or a multitude of computing devices, a set of sensors, a measurement system a processing apparatus or any kind of device producing data.

The system further comprises a set of servers 104. In an embodiment, the set of servers are in more than one tiers 106, 108, 110. The servers of tier 106 are denoted with B1, the servers of tier 108 are denoted with B2, and the servers of tier 110 are denoted with BN. The number of servers may vary. The number of servers may be from a few to several hundred depending on the application. Likewise, the number of tiers may vary. The illustrated example is a simplified model of the structure of the server tiers.

The servers 104 may be located in the Internet and communicate with each other utilising Internet Protocol, IP, communication methods known in the art. The servers may be computing devices comprising at least one processor, at least one memory including computer program code, and one or more communication interfaces. The physical realisation of servers may vary depending on the application. They may be virtual servers executed software by general computing hardware. The servers may act as gateway apparatuses.

In an embodiment, the first apparatus 100 is configured to transmit data received from the data source 102 to a second apparatus 112 via the set of servers 104. the second apparatus may also transmit data or commands to the first apparatus.

In practise, there may be a multitude of first apparatuses and a multitude of second apparatuses connected to the set of servers. In an embodiment, the multitude of second apparatuses may be connected to each other and located behind a firewall in relation to the set of servers.

An existing way of securing communications is to utilise public-key cryptography, also known as asymmetric cryptography, which uses a pair of keys: a public key, which can be distributed to other communicating parties and a private key, which is only known by the owner of the key. In solution utilising public-key cryptography, a sender of a message can encrypt the message using the receiver's public key. The encrypted message can then only be decrypted with the receiver's private key. There are various public-key cryptography methods available. Examples of such methods include RSA (Rivest-Shamir-Adleman), ElGamal encryption system and ECC (Elliptic-curve cryptography) to name a few. Public-key cryptography us widely used, but like all cryptography methods it is not perfect. The encrypted messages may be broken by brute force calculations, for example.

In principle, the less data is available to a potential eavesdropper of communication the more secure the communication is.

Fig.2 is a flowchart illustrating a simplified example embodiment of the proposed solution for securing communication.

In step 200, message is encrypted by the first apparatus using public keys of the recipient of the message and a server of the first tier. Then the message is transmitted to the server.

In step 202, the message is transmitted between the set of servers, from tier to tier. In an embodiment, a server knows identities of part of servers of previous and next tier. In an embodiment, when message is transmitted between servers, public-key cryptography is utilised.

In step 204, the server of the tier closest to recipient apparatus 112 stores the message for the recipient apparatus to fetch until a given time has elapsed.

Thus, basically step 200 illustrates the operation of the sending apparatus, step 202 operation of the set of servers 104 excluding the servers of final tier and step 204 the operation of the servers of final tier.

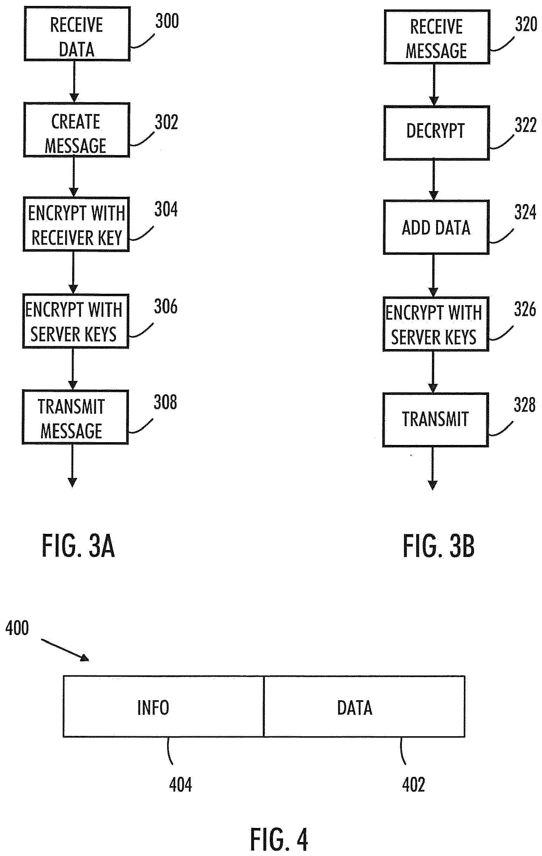

Fig. 3A is a flowchart illustrating an embodiment. The figure illustrates an example of the operations performed in the step 200 in more detail.

In step 300, the first apparatus 100 receives data to be transmitted. The data may be received from the data source 102. The data may be any kind of data, such as measurement results, sensor data, processing data, email message(s), configuration data. The type and nature of the data is not relevant.

In step 302, the first apparatus 100 creates a message to be transmitted, the message comprising at least part of the received data. The creation of the message may be based on the amount of data, allowed size of the message, possible timing issues, for example.

In step 304, the first apparatus 100 encrypts the message with a public key of a second apparatus the data is addressed to. In the example of Fig.1, the recipient is the second apparatus 112.

In an embodiment, the first apparatus 100 is configured to store information on the set of servers. In an embodiment, the first apparatus is configured to store information on IP addresses of servers (or part of the servers) belonging to the tier designated to be closest to the first apparatus. These servers may be denoted as first subset of servers. In addition, the first apparatus stores information on the public keys of the first subset of servers. In the example of Fig.1, the tier closest to the first apparatus 100 is tier 106.

In an embodiment, the first subset of servers or the closest tier may be the tier comprising servers geographically closest to the first apparatus. In an embodiment, the closest tier may be the tier comprising servers to which the connections are of the best quality.

In step 306, the first apparatus 100 encrypts the message with the public keys of the first subset of servers.

In step 308, the first apparatus 100 transmits the message to the first subset of the set of servers.

Thus, in the example of Fig.1, the tier 106 designated to be the tier closest to the first apparatus 100 comprises at least servers 114, 116, 118, 120. The first apparatus is aware of the IP addresses and public keys of the servers 114, 116, 118, 120. The first apparatus first encrypts a message with the public key of the second apparatus 110 obtaining once encrypted message. Then the first apparatus encrypts the once encrypted message with the public key of the server 114 and transmits the message to the server 114. Then the first apparatus encrypts the once encrypted message with the public key of the server 116 and transmits the message to the server 116. The procedure is repeated for servers 118 and 120. In practise the encryption and transmission procedures may occur simultaneously or partly simultaneously or in succession.

In an embodiment, when the message is encrypted with the public keys of the servers, random salt is added to the message to increase the difficulty of breaking the encryption.

Fig. 3B is a flowchart illustrating an embodiment. The figure illustrates an example of the operations performed in the step 202 in more detail.

In step 320, a server of a subset of the servers receives a message. The message may have been transmitted by the first apparatus (if the server belongs to the first subset of servers) or another server (if the server belongs to the second or later subset of servers).

In an embodiment, the servers may be configured to reject a message if there is no capacity to store or process the message.

In step 322, the server decrypts the message utilising the private key of the server. The part of the message encrypted with the public key of the second apparatus remains encrypted.

In step 324, the server adds data related to transmission to the message.

In step 326, the server encrypts the message with public keys of a second subset of the set of servers, the second subset comprising the servers belonging to a tier designated as the next tier.

In step 328, the server transmits the message to the second subset of the set of servers.

For example, let us assume the server processing the message is the server 122 belonging to tier 108 of the example of Fig.1. The tier 110 designated to be the next tier comprises at least servers 124, 126, 128. In this example, the server 122 is aware of the IP addresses and public keys of the servers 124 and 126 of tier 110. Thus, the server 122 encrypts the message with the public key of the server 124 and transmits the message to the server 124. Then the server 122 encrypts the message with the public key of the server 126 and transmits the message to the server 126. In practise the encryption and transmission procedures may occur simultaneously or partly simultaneously or in succession.

In an embodiment, the servers may be configured to monitor available storage or memory space in the servers. The storage or memory space may be used to temporarily store received messages until they are transmitted further. If the storage or memory space is about to fill up, the servers may delete oldest messages from the storage or memory space.

Fig. 4 illustrates the structure of the message 400. The message 400 transmitted between the servers 104 comprises a data part 402 comprising the data originated from the data source 102. This part of the message is encrypted with the public key of the second apparatus 112. The message further comprises an info part 404 comprising data related to transmission to the message, added by the servers conveying the message.

In an embodiment, the data related to transmission to the message comprises one or more of the following: internet protocol address of the server adding the data; port or ports of the server used in the reception/transmission of the message; the internet protocol used in the transmission of the message; a time stamp related to the transmission of the message; information on the status of the server adding the data and random data.

The info part 404 may be located in the beginning of the message (as illustrated in Fig. 4), in the middle of the message, or to the end of the message. It may also be located in more than one sections, in the middle of the data part. The whole message, i.e. the info part 404 and the data part 402, is encrypted with the public key of the server to which the message is next transmitted.

In an embodiment, the above steps 320 to 328 are repeated by servers of each following tier processing of the message until the final subset of the set of servers is reached, the final subset comprising the servers belonging to a tier determined to be the closest tier to the second apparatus.

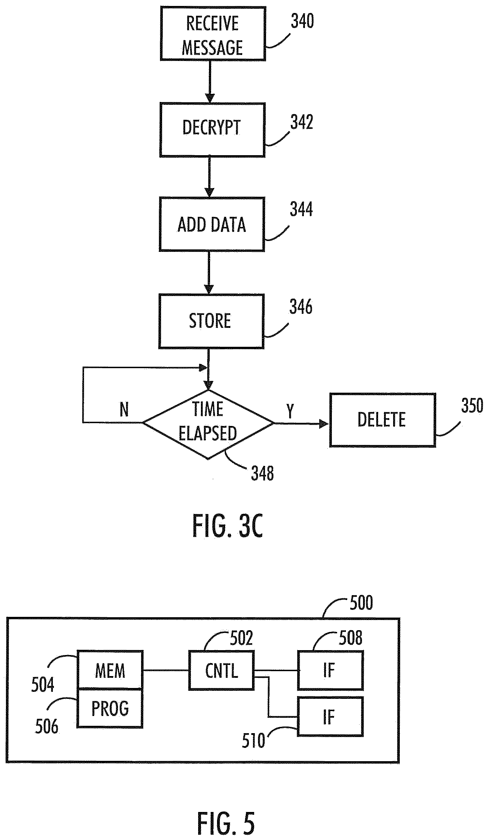

Fig. 3C is a flowchart illustrating an embodiment. The figure illustrates an example of the operations performed in the step 204 in more detail. Part of the steps are similar to example of Fig. 3B. In this example, the steps are performed by a server belonging to the tier closest to the second apparatus 110, for example by the server 124.

In step 340, the server 124 receives a message. The message was transmitted a server belong to the previous subset of the servers, i.e. belonging to a previous tier.

In step 342, the server 124 decrypts the message utilising the private key of the server. The part of the message encrypted with the public key of the second apparatus remains encrypted.

In step 344, the server adds data related to transmission to the message.

In this example, server 124 has no knowledge of any server of a next tier. Thus, it cannot encrypt and transmit the message further. Instead, in step 346, the server 124 stores the message in a memory for the second apparatus to fetch until a given time has elapsed.

In step 348, the server checks whether a determined time has elapsed. If not, the storing of the message continues. If yes, the message is deleted 350 from memory.

In an embodiment, the server may also delete oldest messages if memory of the server is about to fill up.

The servers of the last tier, that have no knowledge of any server of a next tier, are thus storing messages intended to a second apparatus. In practise, there may be a multitude of first apparatuses and a multitude of second apparatuses. Further, a server belonging to the last tier of a given second apparatus may be a belong to some other tier of another first or second apparatus. Thus, the roles of the servers in the set of servers may vary.

In an embodiment, a server may store a multitude of messages intended to multiple second apparatuses.

In an embodiment, second apparatuses are configured to poll the final subset of servers for messages. In the example of Fig.1, the second apparatus 112 is configured to poll servers 124 for messages stored in the servers. If there are messages stored in the servers, the second apparatus 112 is configured to retrieve the detected messages. In an embodiment, the apparatus retrieves all messages currently stored in the servers.

Then the second apparatus 112 is configured to decrypt the messages retrieved from the servers. In the decryption, the second apparatus utilises the private key of the second apparatus. Those messages that were encrypted using the public key of the second apparatus, will be decrypted. Other messages that were encrypted using a public key of some other apparatus will remain encrypted.

As mentioned, in an embodiment, there are a multitude of second apparatuses 112 and they may be connected to each other and located behind a firewall in relation to the servers 106, 108, 110. The multitude of second apparatuses 112 may communicate with each other.

In an embodiment, after decrypting the messages utilising the private key of the second apparatus, the apparatus may determine that some of the messages remained encrypted and thus were addressed to another second apparatus. in such a case the apparatus may be configured to transmit the messages to other second apparatuses to which it is connected.

Fig. 5 illustrates an example embodiment. The figure illustrates a simplified example of an apparatus 500 applying embodiments of the invention. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus the example includes a control circuitry 502 configured to control at least part of the operation of the apparatus.

The apparatus may comprise a memory 504 for storing data, being operationally connected to the control circuitry 502. Furthermore, the memory may store software 506 executable by the control circuitry 502. In an embodiment, the memory may be integrated in the control circuitry. The apparatus may further comprise one or more interface circuitries 508, 510.

In an embodiment, the apparatus is the first apparatus 100. The software 506 may comprise a computer program comprising program code means adapted to cause the control circuitry 502 of the apparatus to perform the embodiments described above, for example the embodiment described in connection with Fig. 3A and in the claims.

If the apparatus is the first apparatus 100, the one of the interfaces may be a transmitter or a transceiver 508 configured to receive data from a data source 102. transmit a signal. Other interface(s) 510 may connect the first apparatus to the set of servers, for example. The interface may provide a wired or wireless connection to the set of servers. The transmitter or transceiver may be connected to an antenna arrangement (not shown). The interfaces may be operationally connected to the control circuitry 502.

In an embodiment, the apparatus is a server of the set or servers 104. The software 506 may comprise a computer program comprising program code means adapted to cause the control circuitry 502 of the apparatus to perform the embodiments described above, for example the embodiment described in connection with Fig. 3B and 3C and in the claims.

If the apparatus is a server of the set or servers 104 the interface(s) 508, 510 may connect the server to other servers of the set of servers and to first or second apparatus, for example. The interfaces may provide a wired or wireless connection to the set of servers. The transmitter or transceiver may be connected to an antenna arrangement (not shown). The interfaces may be operationally connected to the control circuitry 502.

The interfaces between different apparatuses may be realised utilising many different radio protocols utilised in different communication systems. The interfaces may realise a wired internet connection. Part of the connections in the internet may be realised with wireless communication systems. Some examples of different communication systems are the universal mobile telecommunications system (UMTS) radio access network (UTRAN), HSPA (High Speed Packet Access), long term evolution (LTE^{®}, known also as evolved UMTS Terrestrial Radio Access Network E-UTRAN), long term evolution advanced (LTE-A), Wireless Local Area Network (WLAN) based on IEEE 802.11stardard, worldwide interoperability for microwave access (WiMAX^{®}, Bluetooth^{®}, personal communications services (PCS) and systems using ultra-wideband (UWB) technology. IEEE refers to the Institute of Electrical and Electronics Engineers. For example, LTE^{®} and LTE-A are developed by the Third Generation Partnership Project 3GPP.

It will be obvious to a person skilled in the art that, as the technology advances, the inventive concept can be implemented in various ways. The invention and its embodiments are not limited to the examples described above but may vary within the scope of the claims.

## Claims

1. A system for secure communication, comprising
a first apparatus (100) configured to receive data;
a set of servers in more than one tiers (106, 108, 110), each tier comprising more than one servers;
the first apparatus (100) being configured to store the Internet Protocol addresses of a first subset (106) of the set of servers, the first subset comprising the servers belonging to a tier comprising servers geographically closest to the first apparatus or servers to which the connections are of the best quality;
the servers of each tier (106, 108, 110) being configured to store information on the public keys and Internet Protocol addresses of the servers of the previous and following tier;
the first apparatus (100) being further configured to create a message to be transmitted, the message comprising at least part of the received data;
encrypt the message with a public key of a second apparatus (112) the data is addressed to;
encrypt the message with a public key of a server of the first subset (106) of the set of servers and transmit the message to the server;
repeat the encrypting and sending for all servers of the first subset (106) of the set of servers;
each server of the first subset of the servers being configured to
receive the message,
decrypt the message utilising the private key of the server,
add data related to transmission to the message,
encrypt the message with a public key of a server of a second subset (108) of the set of servers, the second subset comprising the servers belonging to a tier designated as the next tier to the first apparatus and transmit the message to the server of the second subset of the set of servers;
repeat the encrypting and transmitting for all servers of the second subset (108) of the set of servers;
repeat the above subset processing of the message until the final subset (110) of the set of servers is reached, the final subset comprising the servers belonging to a tier designated as the closest tier to the second apparatus, the closest tier comprising servers geographically closest to the second apparatus or servers to which the connections are of the best quality;
the final subset (110) of servers being configured to store the message for the second apparatus (112) and delete message if the message is not fetched by the second apparatus within a determined time.

2. The system of claim 1, wherein the data related to transmission added to the message comprises one or more of the following:
internet protocol address of the server adding the data;
port or ports of the server used in the reception/transmission of the message;
the internet protocol used in the transmission of the message;
a time stamp related to the transmission of the message;
information on the status of the server adding the data;
random data.

3. The system of claim 1, wherein the data related to transmission is added to the beginning of the message, in the middle of the message, or to the end of the message.

4. The system of claim 1, further comprising the second apparatus, the second apparatus is configured to
poll the final subset of servers for messages,
retrieve detected messages;
decrypt the messages which were encrypted using the public key of the second apparatus.

5. The system of claim 1, wherein a server of a tier is configured to reject a message if there is no capacity to store or process the message.

6. The system of claim 1, wherein the first apparatus is configured to generate and transmit additional messages where the data is replaced with arbitrary content.

7. A method for secure communication, comprising
receiving (300) data by a first apparatus;
creating (302) by the first apparatus a message to be transmitted, the message comprising at least part of the received data;
encrypting (304) by the first apparatus the message with a public key of a second apparatus the data is addressed to;
encrypting (306) by the first apparatus the message with a public key of a server of a first subset of a set of servers,, the first subset comprising the servers belonging to a tier of more than one tiers, the tier comprising servers geographically closest to the first apparatus or servers to which the connections are of the best quality, ), each tier comprising more than one servers ; first apparatus storing the Internet Protocol addresses of the first subset of the set of servers,
the servers of each tier storing information on the public keys and Internet Protocol addresses of the servers of the previous and following tier;
transmitting (308) by the first apparatus the message to the server of the first subset of the set of servers and repeating the encrypting and sending for all servers of the first subset of the set of servers;
each server of the first subset of the servers being configured to receive (320) the message,
decrypt (322) the message utilising the private key of the server,
add (324) data related to transmission to the message,
encrypt (326) the message with a public key of a server of a second subset of the set of servers, the second subset comprising the servers belonging to a tier designated as the next tier to the first apparatus and
transmit (328) the message to the server of the second subset of the set of servers and repeat the encrypting and transmitting for all servers of the second subset (108) of the set of servers;
repeat the above subset processing of the message until the final subset of the set of servers is reached, the final subset comprising the servers belonging to a tier designated as the closest tier to the second apparatus, the closest tier comprising servers geographically closest to the second apparatus or servers to which the connections are of the best quality;
store by the final subset of servers the message for the second apparatus and delete message if the message is not fetched by the second apparatus within a determined time.

8. The method of claim 7, wherein the data related to transmission added to
the message comprises one or more of the following:
internet protocol address of the server adding the data;
port or ports of the server used in the reception/transmission of the message;
the internet protocol used in the transmission of the message;
a time stamp related to the transmission of the message;
information on the status of the server adding the data;
random data.

9. The method of claim 7, wherein the data related to transmission is added to the beginning of the message, in the middle of the message, or to the end of the message.

10. The method of claim 7, further comprising
polling by the second apparatus the final subset of servers for messages,
retrieving by the second apparatus the detected messages;
decrypting by the second apparatus the messages which were encrypted using the public key of the second apparatus.

11. The method of claim 7, further comprising
rejecting by a server of a tier a message if there is no capacity to store or process the message.

## Patentansprüche

1. System für sichere Kommunikation, das Folgendes umfasst:
eine erste Vorrichtung (100), die dazu ausgestaltet ist, Daten zu empfangen;
eine Menge von Servern in mehr als einer Ebene (106, 108, 110), wobei jede Ebene mehr als einen Server umfasst;
wobei die erste Vorrichtung (100) dazu ausgestaltet ist, die Internetprotokolladressen einer ersten Teilmenge (106) der Menge von Servern zu speichern, wobei die erste Teilmenge die Server umfasst, die zu einer Ebene gehören, die Server, die sich geographisch am nächsten an der ersten Vorrichtung befinden, oder Server umfasst, mit denen die Verbindungen die beste Qualität aufweisen;
wobei die Server von jeder Ebene (106, 108, 110) dazu ausgestaltet sind, Informationen über die öffentlichen Schlüssel und Internetprotokolladressen der Server der vorherigen und folgenden Ebene zu speichern;
wobei die erste Vorrichtung (100) ferner dazu ausgestaltet ist, eine zu sendende Nachricht zu erzeugen, wobei die Nachricht zumindest einen Teil der empfangenen Daten umfasst;
Verschlüsseln der Nachricht mit einem öffentlichen Schlüssel einer zweiten Vorrichtung (112), an die die Daten adressiert sind;
Verschlüsseln der Nachricht mit einem öffentlichen Schlüssel eines Servers der ersten Teilmenge (106) der Menge von Servern und Senden der Nachricht an den Server;
Wiederholen des Verschlüsselns und des Sendens für sämtliche Server der ersten Teilmenge (106) von der Menge von Servern;
wobei jeder Server der ersten Teilmenge von den Servern für Folgendes ausgestaltet ist:
Empfangen der Nachricht,
Entschlüsseln der Nachricht unter Verwendung des privaten Schlüssels des Servers,
Hinzufügen von Daten, welche die Sendung betreffen, zu der Nachricht,
Verschlüsseln der Nachricht mit einem öffentlichen Schlüssel eines Servers einer zweiten Teilmenge (108) der Menge von Servern, wobei die zweite Teilmenge die Server umfasst, die zu einer Ebene gehören, die als die nächste Ebene zu der ersten Vorrichtung bezeichnet ist, und Senden der Nachricht an den Server der zweiten Teilmenge der Menge von Servern;
Wiederholen des Verschlüsselns und Sendens für sämtliche Server der zweiten Teilmenge (108) der Menge von Servern;
Wiederholen der vorhergehenden Teilmengenverarbeitung der Nachricht, bis die Endteilmenge (110) der Menge von Servern erreicht wird, wobei die Endteilmenge die Server umfasst, die zu einer Ebene gehören, die als die nächste Ebene zu der zweiten Vorrichtung bezeichnet wird, wobei die nächste Ebene Server, die sich geographisch am nächsten an der zweiten Vorrichtung befinden, oder Server umfasst, zu denen die Verbindungen die beste Qualität aufweisen;
wobei die Endteilmenge (110) von Servern dazu ausgestaltet ist, die Nachricht für die zweite Vorrichtung (112) zu speichern und die Nachricht zu löschen, wenn die Nachricht nicht innerhalb einer bestimmten Zeit durch die zweite Vorrichtung abgerufen wird.

2. System nach Anspruch 1, wobei die Daten, welche die Sendung betreffen und die zu der Nachricht hinzugefügt werden, eines oder mehrere von Folgendem umfassen:
Internetprotokolladresse des Servers, der die Daten hinzufügt;
Port oder Ports des beim/bei der Empfang/Sendung der Nachricht verwendeten Servers;
das bei der Sendung der Nachricht verwendete Internetprotokoll;
einen Zeitstempel, der die Sendung der Nachricht betrifft;
Informationen über den Status des Servers, der die Daten hinzufügt;
Zufallsdaten.

3. System nach Anspruch 1, wobei die Daten, welche die Sendung betreffen, dem Anfang der Nachricht, in der Mitte der Nachricht oder dem Ende der Nachricht hinzugefügt werden.

4. System nach Anspruch 1, das ferner die zweite Vorrichtung umfasst, wobei die zweite Vorrichtung für Folgendes ausgestaltet ist:
zyklisches Abfragen der Endteilmenge von Servern auf Nachrichten,
Abrufen erkannter Nachrichten;
Entschlüsseln der Nachrichten, die unter Verwendung des öffentlichen Schlüssels der zweiten Vorrichtung verschlüsselt wurden.

5. System nach Anspruch 1, wobei ein Server einer Ebene dazu ausgestaltet ist, eine Nachricht zurückzuweisen, wenn keine Kapazität zum Speichern oder Verarbeiten der Nachricht vorhanden ist.

6. System nach Anspruch 1, wobei die erste Vorrichtung dazu ausgestaltet ist, zusätzliche Nachrichten zu erzeugen und zu senden, wo die Daten mit beliebigem Inhalt ersetzt werden.

7. Verfahren für sichere Kommunikation, das Folgendes umfasst:
Empfangen (300) von Daten durch eine erste Vorrichtung;
Erzeugen (302) einer zu sendenden Nachricht durch die erste Vorrichtung, wobei die Nachricht zumindest einen Teil der empfangenen Daten umfasst;
Verschlüsseln (304) der Nachricht mit einem öffentlichen Schlüssel einer zweiten Vorrichtung, an welche die Daten adressiert sind, durch die erste Vorrichtung;
Verschlüsseln (306) der Nachricht mit einem öffentlichen Schlüssel eines Servers einer ersten Teilmenge einer Menge von Servern durch die erste Vorrichtung, wobei die erste Teilmenge die Server umfasst, die zu einer Ebene von mehr als einer Ebene gehören, wobei die Ebene Server, die sich geographisch am nächsten an der ersten Vorrichtung befinden, oder Server umfasst, mit denen die Verbindungen die beste Qualität aufweisen, wobei jede Ebene mehr als einen Server umfasst; wobei die erste Vorrichtung die Internetprotokolladressen der ersten Teilmenge der Menge von Servern speichert,
wobei die Server von jeder Ebene Informationen über die öffentlichen Schlüssel und Internetprotokolladressen der Server der vorherigen und folgenden Ebene speichern;
Senden (308) der Nachricht an den Server der ersten Teilmenge der Menge von Servern durch die erste Vorrichtung und Wiederholen des Verschlüsselns und Sendens für sämtliche Server der ersten Teilmenge der Menge von Servern;
wobei jeder Server der ersten Teilmenge von den Servern ausgestaltet ist zum:
Empfangen (320) der Nachricht,
Entschlüsseln (322) der Nachricht unter Verwendung des privaten Schlüssels des Servers,
Hinzufügen (324) von Daten, welche die Sendung betreffen, zu der Nachricht,
Verschlüsseln (326) der Nachricht mit einem öffentlichen Schlüssel eines Servers einer zweiten Teilmenge der Menge von Servern, wobei die zweite Teilmenge die Server umfasst, die zu einer Ebene gehören, die als die nächste Ebene zu der ersten Vorrichtung bezeichnet wird, und
Senden (328) der Nachricht an den Server der zweiten Teilmenge der Menge von Servern und Wiederholen des Verschlüsselns und Sendens für sämtliche Server der zweiten Teilmenge (108) der Menge von Servern;
Wiederholen der vorhergehenden Teilmengenverarbeitung der Nachricht, bis die Endteilmenge der Menge von Servern erreicht wurde, wobei die Endteilmenge die Server umfasst, die zu einer Ebene gehören, die als die nächste Ebene zu der zweiten Vorrichtung bezeichnet wird, wobei die nächste Ebene Server, die sich geographisch am nächsten an der zweiten Vorrichtung befinden, oder Server umfasst, mit denen die Verbindungen die beste Qualität aufweisen;
Speichern der Nachricht für die zweite Vorrichtung durch die Endteilmenge von Servern und Löschen der Nachricht, wenn die Nachricht nicht innerhalb einer bestimmten Zeit durch die zweite Vorrichtung abgerufen wird.

8. Verfahren nach Anspruch 7, wobei die Daten, welche die Sendung betreffen, die zu der Nachricht hinzugefügt werden, eines oder mehrere von Folgendem umfassen:
Internetprotokolladresse des Servers, der die Daten hinzufügt;
Port oder Ports des Servers, der beim/bei der Empfang/Sendung der Nachricht verwendet wird;
das bei der Sendung der Nachricht verwendete Internetprotokoll;
einen Zeitstempel, der die Sendung der Nachricht betrifft;
Informationen über den Status des Servers, der die Daten hinzufügt;
Zufallsdaten.

9. Verfahren nach Anspruch 7, wobei die Daten, welche die Übertragung betreffen, zum Anfang der Nachricht, in der Mitte der Nachricht oder zum Ende der Nachricht hinzugefügt werden.

10. Verfahren nach Anspruch 7, das ferner Folgendes umfasst:
zyklisches Abfragen der Endteilmenge von Servern nach Nachrichten durch die zweite Vorrichtung,
Abrufen der erkannten Nachrichten durch die zweite Vorrichtung;
Entschlüsseln der Nachrichten, die unter Verwendung des öffentlichen Schlüssels der zweiten Vorrichtung verschlüsselt wurden, durch die zweite Vorrichtung.

11. Verfahren nach Anspruch 7, das ferner Folgendes umfasst:
Zurückweisen einer Nachricht durch einen Server einer Ebene, wenn keine Kapazität zum Speichern oder Verarbeiten der Nachricht vorhanden ist.

## Revendications

1. Système pour une communication sécurisée, comprenant
un premier appareil (100) configuré pour recevoir des données ;
un ensemble de serveurs dans plus d'un niveau (106, 108, 110), chaque niveau comprenant plus d'un serveur ;
le premier appareil (100) étant configuré pour stocker les adresses de protocole Internet d'un premier sous-ensemble (106) de l'ensemble de serveurs, le premier sous-ensemble comprenant les serveurs appartenant à un niveau comprenant des serveurs géographiquement les plus proches du premier appareil ou des serveurs vers lesquels les connexions sont de la meilleure qualité ;
les serveurs de chaque niveau (106, 108, 110) étant configurés pour stocker des informations sur les clés publiques et les adresses de protocole Internet des serveurs du niveau précédent et du niveau suivant ;
le premier appareil (100) étant en outre configuré pour créer un message devant être émis, le message comprenant au moins une partie des données reçues ;
chiffrer le message avec une clé publique d'un second appareil (112) auquel les données sont adressées ;
chiffrer le message avec une clé publique d'un serveur du premier sous-ensemble (106) de l'ensemble de serveurs et émettre le message vers le serveur ;
répéter le chiffrement et l'envoi pour tous les serveurs du premier sous-ensemble (106) de l'ensemble de serveurs ;
chaque serveur du premier sous-ensemble des serveurs étant configuré pour
recevoir le message,
déchiffrer le message en utilisant la clé privée du serveur,
ajouter des données se rapportant à l'émission du message,
chiffrer le message avec une clé publique d'un serveur d'un second sous-ensemble (108) de l'ensemble de serveurs, le second sous-ensemble comprenant les serveurs appartenant à un niveau désigné comme étant le prochain niveau pour le premier appareil et émettre le message vers le serveur du second sous-ensemble de l'ensemble de serveurs ;
répéter le chiffrement et l'émission pour tous les serveurs du second sous-ensemble (108) de l'ensemble de serveurs ;
répéter le traitement de sous-ensemble ci-dessus du message jusqu'à ce que le sous-ensemble final (110) de l'ensemble de serveurs soit atteint, le sous-ensemble final comprenant les serveurs appartenant à un niveau désigné comme étant le plus proche niveau pour le second appareil, le plus proche niveau comprenant des serveurs géographiquement les plus proches du second appareil ou des serveurs vers lesquels les connexions sont de la meilleure qualité ;
le sous-ensemble final (110) de serveurs étant configuré pour stocker le message pour le second appareil (112) et supprimer le message si le message n'est pas extrait par le second appareil pendant une durée déterminée.

2. Système selon la revendication 1, dans lequel les données se rapportant à l'émission ajoutées au message comprennent l'un ou plusieurs parmi ce qui suit :
une adresse de protocole Internet du serveur ajoutant les données ;
un port ou des ports du serveur utilisé dans la réception/l'émission du message ;
le protocole Internet utilisé dans l'émission du message ;
un horodatage se rapportant à l'émission du message ;
des informations sur le statut du serveur ajoutant les données ;
des données aléatoires.

3. Système selon la revendication 1, dans lequel les données se rapportant à l'émission sont ajoutées au début du message, au milieu du message, ou à la fin du message.

4. Système selon la revendication 1, comprenant en outre le second appareil, le second appareil est configuré pour
interroger le sous-ensemble final de serveurs pour des messages,
récupérer des messages détectés ;
déchiffrer les messages qui ont été chiffrés à l'aide de la clé publique du second appareil.

5. Système selon la revendication 1, dans lequel un serveur d'un niveau est configuré pour rejeter un message s'il n'y a pas la capacité de stocker ou de traiter le message.

6. Système selon la revendication 1, dans lequel le premier appareil est configuré pour générer et émettre des messages supplémentaires où les données sont remplacées par du contenu arbitraire.

7. Procédé pour une communication sécurisée, comprenant
la réception (300) de données par un premier appareil ;
la création (302), par le premier appareil, d'un message devant être émis, le message comprenant au moins une partie des données reçues ;
le chiffrement (304), par le premier appareil, du message avec une clé publique d'un second appareil auquel les données sont adressées ;
le chiffrement (306), par le premier appareil, du message avec une clé publique d'un serveur d'un premier sous-ensemble d'un ensemble de serveurs, le premier sous-ensemble comprenant les serveurs appartenant à un niveau de plus d'un niveau, le niveau comprenant des serveurs géographiquement les plus proches du premier appareil ou des serveurs vers lesquels les connexions sont de la meilleure qualité, chaque niveau comprenant plus d'un serveur ; le premier appareil stockant les adresses de protocole Internet du premier sous-ensemble de l'ensemble de serveurs,
les serveurs de chaque niveau stockant des informations sur les clés publiques et les adresses de protocole Internet des serveurs du niveau précédent et du niveau suivant ;
l'émission (308), par le premier appareil, du message vers le serveur du premier sous-ensemble de l'ensemble de serveurs et la répétition du chiffrement et de l'envoi pour tous les serveurs du premier sous-ensemble de l'ensemble de serveurs ;
chaque serveur du premier sous-ensemble des serveurs étant configuré pour
recevoir (320) le message,
déchiffrer (322) le message en utilisant la clé privée du serveur,
ajouter (324) des données se rapportant à l'émission du message,
chiffrer (326) le message avec une clé publique d'un serveur d'un second sous-ensemble de l'ensemble de serveurs, le second sous-ensemble comprenant les serveurs appartenant à un niveau désigné comme étant le prochain niveau pour le premier appareil et
émettre (328) le message vers le serveur du second sous-ensemble de l'ensemble de serveurs et répéter le chiffrement et l'émission pour tous les serveurs du second sous-ensemble (108) de l'ensemble de serveurs ;
répéter le traitement de sous-ensemble ci-dessus du message jusqu'à ce que le sous-ensemble final de l'ensemble de serveurs soit atteint, le sous-ensemble final comprenant les serveurs appartenant à un niveau désigné comme étant le plus proche niveau pour le second appareil, le plus proche niveau comprenant des serveurs géographiquement les plus proches du second appareil ou des serveurs vers lesquels les connexions sont de la meilleure qualité ;
stocker, par le sous-ensemble final de serveurs, le message pour le second appareil et supprimer le message si le message n'est pas extrait par le second appareil pendant une durée déterminée.

8. Procédé selon la revendication 7, dans lequel les données se rapportant à l'émission ajoutées au message comprennent l'un ou plusieurs parmi ce qui suit :
une adresse de protocole Internet du serveur ajoutant les données ;
un port ou des ports du serveur utilisé dans la réception/l'émission du message ;
le protocole Internet utilisé dans l'émission du message ;
un horodatage se rapportant à l'émission du message ;
des informations sur le statut du serveur ajoutant les données ;
des données aléatoires.

9. Procédé selon la revendication 7, dans lequel les données se rapportant à l'émission sont ajoutées au début du message, au milieu du message, ou à la fin du message.

10. Procédé selon la revendication 7, comprenant en outre
l'interrogation, par le second appareil, du sous-ensemble final de serveurs pour des messages,
la récupération, par le second appareil, des messages détectés ;
le déchiffrement, par le second appareil, des messages qui ont été chiffrés à l'aide de la clé publique du second appareil.

11. Procédé selon la revendication 7, comprenant en outre le rejet, par un serveur d'un niveau, d'un message s'il n'y a pas la capacité de stocker ou de traiter le message.
